# EUROPEAN PATENT APPLICATION

(11) **EP 4 685 637 A1**
(43) Date of publication of application: **28.01.2026**
(21) Application number: 24773836.2
(22) Date of filing: 19.02.2024
(51) Int. Cl.: G06F 9/455

(54) **VIRTUAL INSTANCE CONFIGURATION METHOD BASED ON CLOUD COMPUTING TECHNOLOGY AND CLOUD MANAGEMENT PLATFORM**

(30) Priority: 21.03.2023 CN 202310282695
(71) Applicant: Huawei Cloud Computing Technologies Co., Ltd., Guiyang, Guizhou 550025 (CN)
(72) Inventor: ZHANG, Jiawei, Guiyang, Guizhou 550025 (CN); HUANG, Jian, Guiyang, Guizhou 550025 (CN); ZHANG, Yongming, Guiyang, Guizhou 550025 (CN)
(74) Representative: Goddar, Heinz J.
(86) International application number: PCT/CN2024/077577
(87) International publication number: WO 2024/193268

(57) **Abstract**

Embodiments of this application disclose a cloud computing technology-based virtual instance configuration method and a cloud management platform, and relate to the field of computer technologies. The method includes: obtaining a virtual instance creation request input by a tenant; and creating a virtual instance in a first server of a computing pool based on the virtual instance creation request. The virtual instance creation request carries specification configuration information of the virtual instance, and the specification configuration information indicates a computing resource, a memory resource, a storage resource, and a network resource that are required by the virtual instance. The computing resource of the virtual instance is provided by the first server, the memory resource of the virtual instance is provided by a second server of a memory pool for the virtual instance in the first server via a high-speed network, the storage resource of the virtual instance is provided by a third server of a storage pool for the virtual instance in the first server via the high-speed network, and the network resource of the virtual instance is provided by a fourth server of a network pool for the virtual instance in the first server via the high-speed network.

## Description

This application claims priority to Chinese Patent Application No. 202310282695.6, filed with the China National Intellectual Property Administration on March 21, 2023 and entitled "CLOUD COMPUTING TECHNOLOGY-BASED VIRTUAL INSTANCE CONFIGURATION METHOD AND CLOUD MANAGEMENT PLATFORM", which is incorporated herein by reference in its entirety.

### TECHNICAL FIELD

Embodiments of this application relate to the field of computer technologies, and in particular, to a cloud computing technology-based virtual instance configuration method and a cloud management platform.

### BACKGROUND

With development of cloud computing, serverless computing (serverless computing) is gradually popularized. The serverless computing breaks down an original application and provides more fine-grained service scheduling. Resources are only occupied to call services when requests arrive, and no resource is occupied when there is no request. Fees are charged based on a quantity of calling times and duration. In comparison with a conventional online service mode, the serverless computing greatly reduces use costs for a user, allowing the user to completely ignore server configuration issues. This simplifies development, and provides better scalability than a conventional online service.

In a related technology, a virtual instance is a main resource isolation solution used by a serverless computing service. In addition, data centers are evolving to separate data centers. The separate data center is a data center architecture in which various resources are highly intensive and interconnected via a high-speed network. In this way, cloud computing costs can be greatly reduced.

However, in the current serverless computing, an operating mode of the virtual instance is directly applied to the separate data center, and performance of the virtual instance cannot be fully utilized, which causes high costs. Therefore, how to reduce operating costs of the virtual instance is one of the problems that need to be urgently resolved by a person skilled in the art.

### SUMMARY

Embodiments of this application provide a cloud computing technology-based virtual instance configuration method and a cloud management platform, to reduce operating costs of a virtual instance. To achieve the foregoing objectives, the following technical solutions are used in embodiments of this application.

According to a first aspect, an embodiment of this application provides a cloud computing technology-based virtual instance configuration method. The method is applied to a cloud management platform, the cloud management platform is configured to manage an infrastructure that provides a computing service, the infrastructure includes a data center, and the data center includes a computing pool, a memory pool, a storage pool, and a network pool that are separately disposed. The computing pool includes at least one server configured to provide a computing resource, the memory pool includes at least one server configured to provide a memory resource, the storage pool includes at least one server configured to provide a storage resource, the network pool includes at least one server configured to provide a network resource, and the computing pool, the memory pool, the storage pool, and the network pool are connected via a high-speed network. The method includes: obtaining a virtual instance creation request input by a tenant; and creating a virtual instance in a first server of the computing pool based on the virtual instance creation request. The virtual instance creation request carries specification configuration information of the virtual instance, and the specification configuration information indicates a computing resource, a memory resource, a storage resource, and a network resource that are required by the virtual instance. The computing resource of the virtual instance is provided by the first server, the memory resource of the virtual instance is provided by a second server of the memory pool for the virtual instance in the first server via the high-speed network, the storage resource of the virtual instance is provided by a third server of the storage pool for the virtual instance in the first server via the high-speed network, and the network resource of the virtual instance is provided by a fourth server of the network pool for the virtual instance in the first server via the high-speed network.

It can be learned that, according to the virtual instance configuration method provided in this embodiment of this application, operating resources (namely, the computing resource, the memory resource, the storage resource, and the network resource) of the virtual instance may be dynamically configured based on the specification configuration information that is of the virtual instance and that is carried in the virtual instance creation request. In comparison with a case in which high-performance operating resources are fixedly configured when the virtual instance is created, dynamically configuring the operating resources of the virtual instance based on the specification configuration information that is of the virtual instance and that is carried in the virtual instance creation request can reduce operating costs of the virtual instance.

In addition, the infrastructure provided in this embodiment of this application includes the data center, and the data center includes the computing pool, the memory pool, the storage pool, and the network pool that are separately disposed. The computing pool includes the at least one server configured to provide the computing resource, the memory pool includes the at least one server configured to provide the memory resource, the storage pool includes the at least one server configured to provide the storage resource, the network pool includes the at least one server configured to provide the network resource, and the computing pool, the memory pool, the storage pool, and the network pool are connected via the high-speed network. In this way, a resource-intensive cloud-native resource pool with high-speed interconnection is obtained. The resource-intensive cloud-native resource pool provides a low-cost and high-performance virtual instance resource pool.

In another aspect, the cloud management platform is configured to manage the infrastructure that provides the computing service, and implement virtual instance resource management in a distributed manner.

In a possible implementation, a virtual instance specification adjustment request may be further obtained. The virtual instance specification adjustment request indicates the cloud management platform to adjust a size of one or sizes of any combination of the computing resource, the memory resource, the storage resource, and the network resource that are provided for the virtual instance. Then, based on the virtual instance specification adjustment request, the first server is notified to adjust a size of the computing resource provided for the virtual instance, the second server is notified to adjust a size of the memory resource provided for the virtual instance via the high-speed network, the third server is notified to adjust a size of the storage resource provided for the virtual instance via the high-speed network, and/or the fourth server is notified to adjust a size of the network resource provided for the virtual instance via the high-speed network.

It can be learned that, according to the virtual instance configuration method provided in this embodiment of this application, sizes of operating resources (namely, the computing resource, the memory resource, the storage resource, and the network resource) of the virtual instance may be further dynamically adjusted based on the adjustment request carried in the virtual instance adjustment request. In comparison with a case in which high-performance operating resources are fixedly configured for the virtual instance, dynamically adjusting the size of the operating resource of the virtual instance based on the adjustment request carried in the virtual instance adjustment request can reduce operating costs of the virtual instance.

In a possible implementation, a plurality of processor cores are disposed in each server in the computing pool, the computing resource includes the plurality of processor cores, a plurality of memories are disposed in each server in the memory pool, the memory resource includes the plurality of memories, each server in the storage pool includes a plurality of hard disks, the storage resource includes the plurality of hard disks, each server in the network pool includes a plurality of network interface cards, and the network resource includes the plurality of network interface cards.

It can be learned that, according to the virtual instance configuration method provided in this embodiment of this application, the operating resources (namely, the computing resource, the memory resource, the storage resource, and the network resource) of the virtual instance can be dynamically configured from the computing pool including the plurality of processor cores, the memory pool including the plurality of memories, the storage pool including the plurality of hard disks, and the network pool including the plurality of network interface cards based on the specification configuration information that is of the virtual instance and that is carried in the virtual instance creation request. In comparison with a case in which high-performance operating resources are fixedly configured when the virtual instance is created, dynamically configuring the operating resources of the virtual instance based on the specification configuration information that is of the virtual instance and that is carried in the virtual instance creation request can reduce operating costs of the virtual instance.

In a possible implementation, the virtual instance includes a virtual machine or a container.

It can be learned that, according to the virtual instance configuration method provided in this embodiment of this application, operating resources (namely, the computing resource, the memory resource, the storage resource, and the network resource) of the virtual machine or the container may be dynamically configured based on the specification configuration information that is of the virtual instance and that is carried in the virtual instance creation request. In comparison with a case in which high-performance operating resources are fixedly configured when the virtual machine or the container is created, dynamically configuring the operating resources of the virtual machine or the container based on the specification configuration information that is of the virtual instance and that is carried in the virtual instance creation request can reduce operating costs of the virtual machine or the container.

In a possible implementation, the high-speed network includes a remote direct memory access (remote direct memory access, RDMA) network, a compute express link (compute express link, CXL) network, or a non-volatile memory express (non-volatile memory express, NVME) network.

According to a second aspect, an embodiment of this application provides another cloud computing technology-based virtual instance configuration method. The method is applied to a cloud management platform, the cloud management platform is configured to manage an infrastructure that provides a computing service, the infrastructure includes a data center, and the data center includes a computing memory pool, a storage pool, and a network pool that are separately disposed. The computing memory pool includes at least one server configured to provide a computing resource and a memory resource, the network pool includes at least one server configured to provide a network resource, and the computing memory pool, the storage pool, and the network pool are connected via a high-speed network. The method includes: obtaining a virtual instance creation request input by a tenant, where the virtual instance creation request carries specification configuration information of a virtual instance, and the specification configuration information indicates a computing resource, a memory resource, a storage resource, and a network resource that are required by the virtual instance; and creating the virtual instance in a first server of the computing memory pool based on the virtual instance creation request, where the computing resource and the memory resource of the virtual instance are provided by the first server, the storage resource of the virtual instance is provided by a second server of the storage pool for the virtual instance in the first server via the high-speed network, and the network resource of the virtual instance is provided by a third server of the network pool for the virtual instance in the first server via the high-speed network.

In a possible implementation, the method further includes: obtaining a virtual instance specification adjustment request, where the virtual instance specification adjustment request indicates the cloud management platform to adjust a size of one or sizes of any combination of the computing resource, the memory resource, the storage resource, and the network resource that are provided for the virtual instance; and based on the virtual instance specification adjustment request, notifying the first server to adjust a size of the computing resource provided for the virtual instance, notifying the first server to adjust a size of the memory resource provided for the virtual instance via the high-speed network, notifying the second server to adjust a size of the storage resource provided for the virtual instance via the high-speed network, and/or notifying the third server to adjust a size of the network resource provided for the virtual instance via the high-speed network.

In a possible implementation, a plurality of processor cores are disposed in each server in the computing memory pool, the computing resource includes the plurality of processor cores, a plurality of memories are disposed in each server in the computing memory pool, the memory resource includes the plurality of memories, each server in the storage pool includes a plurality of hard disks, the storage resource includes the plurality of hard disks, each server in the network pool includes a plurality of network interface cards, and the network resource includes the plurality of network interface cards.

In a possible implementation, the virtual instance includes a virtual machine or a container.

In a possible implementation, the high-speed network includes an RDMA network, a CXL network, or an NVMe network.

According to a third aspect, an embodiment of this application provides a cloud management platform. The cloud management platform is configured to manage an infrastructure that provides a computing service, and the infrastructure includes a data center, the data center includes a computing pool, a memory pool, a storage pool, and a network pool that are separately disposed. The computing pool includes at least one server configured to provide a computing resource, the memory pool includes at least one server configured to provide a memory resource, the storage pool includes at least one server configured to provide a storage resource, the network pool includes at least one server configured to provide a network resource, and the computing pool, the memory pool, the storage pool, and the network pool are connected via a high-speed network. The cloud management platform includes: a request obtaining module, configured to obtain a virtual instance creation request input by a tenant, where the virtual instance creation request carries specification configuration information of a virtual instance, and the specification configuration information indicates a computing resource, a memory resource, a storage resource, and a network resource that are required by the virtual instance; and a virtual instance creation module, configured to create the virtual instance in a first server of the computing pool based on the virtual instance creation request, where the computing resource of the virtual instance is provided by the first server, the memory resource of the virtual instance is provided by a second server of the memory pool for the virtual instance in the first server via the high-speed network, the storage resource of the virtual instance is provided by a third server of the storage pool for the virtual instance in the first server via the high-speed network, and the network resource of the virtual instance is provided by a fourth server of the network pool for the virtual instance in the first server via the high-speed network.

In a possible implementation, the request obtaining module is further configured to obtain a virtual instance specification adjustment request. The virtual instance specification adjustment request indicates the cloud management platform to adjust a size of one or sizes of any combination of the computing resource, the memory resource, the storage resource, and the network resource that are provided for the virtual instance. The virtual instance creation module is further configured to: based on the virtual instance specification adjustment request, notify the first server to adjust a size of the computing resource provided for the virtual instance, notify the second server to adjust a size of the memory resource provided for the virtual instance via the high-speed network, notify the third server to adjust a size of the storage resource provided for the virtual instance via the high-speed network, and/or notify the fourth server to adjust a size of the network resource provided for the virtual instance via the high-speed network.

In a possible implementation, a plurality of processor cores are disposed in each server in the computing pool, the computing resource includes the plurality of processor cores, a plurality of memories are disposed in each server in the memory pool, the memory resource includes the plurality of memories, each server in the storage pool includes a plurality of hard disks, the storage resource includes the plurality of hard disks, each server in the network pool includes a plurality of network interface cards, and the network resource includes the plurality of network interface cards.

In a possible implementation, the virtual instance includes a virtual machine or a container.

In a possible implementation, the high-speed network includes an RDMA network, a CXL network, or an NVMe network.

According to a fourth aspect, an embodiment of this application further provides another cloud management platform, the cloud management platform is configured to manage an infrastructure that provides a computing service, the infrastructure includes a data center, and the data center includes a computing memory pool, a storage pool, and a network pool that are separately disposed. The computing memory pool includes at least one server configured to provide a computing resource and a memory resource, the network pool includes at least one server configured to provide a network resource, and the computing memory pool, the storage pool, and the network pool are connected via a high-speed network. The cloud management platform includes: a request obtaining module, configured to obtain a virtual instance creation request input by a tenant, where the virtual instance creation request carries specification configuration information of a virtual instance, and the specification configuration information indicates a computing resource, a memory resource, a storage resource, and a network resource that are required by the virtual instance; and a virtual instance creation module, configured to create the virtual instance in a first server of the computing memory pool based on the virtual instance creation request, where the computing resource and the memory resource of the virtual instance are provided by the first server, the storage resource of the virtual instance is provided by a second server of the storage pool for the virtual instance in the first server via the high-speed network, and the network resource of the virtual instance is provided by a third server of the network pool for the virtual instance in the first server via the high-speed network.

In a possible implementation, the request obtaining module is further configured to: obtain a virtual instance specification adjustment request. The virtual instance specification adjustment request indicates the cloud management platform to adjust a size of one or sizes of any combination of the computing resource, the memory resource, the storage resource, and the network resource that are provided for the virtual instance. The virtual instance creation module is further configured to: based on the virtual instance specification adjustment request, notify the first server to adjust a size of the computing resource provided for the virtual instance, notify the first server to adjust a size of the memory resource provided for the virtual instance via the high-speed network, notify the second server to adjust a size of the storage resource provided for the virtual instance via the high-speed network, and/or notify the third server to adjust a size of the network resource provided for the virtual instance via the high-speed network.

In a possible implementation, a plurality of processor cores are disposed in each server in the computing memory pool, the computing resource includes the plurality of processor cores, a plurality of memories are disposed in each server in the computing memory pool, the memory resource includes the plurality of memories, each server in the storage pool includes a plurality of hard disks, the storage resource includes the plurality of hard disks, each server in the network pool includes a plurality of network interface cards, and the network resource includes the plurality of network interface cards.

In a possible implementation, the virtual instance includes a virtual machine or a container.

In a possible implementation, the high-speed network includes an RDMA network, a CXL network, or an NVMe network.

According to a fifth aspect, an embodiment of this application further provides a computing device cluster, including at least one computing device. Each computing device includes a processor and a memory. The processor of the at least one computing device is configured to execute instructions stored in the memory of the at least one computing device, so that the computing device cluster is enabled to perform the method according to any one of the first aspect and the implementations of the first aspect.

According to a sixth aspect, an embodiment of this application further provides a chip, including an input interface, an output interface, and at least one processor. Optionally, the chip further includes a memory. The at least one processor is configured to execute code in the memory. When the at least one processor executes the code, the chip implements the method according to any one of the first aspect or the possible implementations of the first aspect.

Optionally, the chip may alternatively be an integrated circuit.

According to a seventh aspect, an embodiment of this application further provides a computer-readable storage medium, configured to store a computer program. The computer program is used to implement the method according to any one of the first aspect or the possible implementations of the first aspect.

According to an eighth aspect, an embodiment of this application further provides a computer program product including instructions. When the instructions are run on a computer, the computer is enabled to implement the method according to any one of the first aspect or the possible implementations of the first aspect.

The cloud management platform, the computer storage medium, the computer program product, and the chip provided in embodiments are all configured to perform the method provided above. Therefore, for beneficial effect that can be achieved by the cloud management platform, the computer storage medium, the computer program product, and the chip, refer to the beneficial effect in the method provided above. Details are not described herein again.

### BRIEF DESCRIPTION OF DRAWINGS

To describe technical solutions in embodiments of this application more clearly, the following briefly describes accompanying drawings for describing embodiments. It is clear that the accompanying drawings in the following descriptions show merely some of embodiments of this application, and a person of ordinary skill in the art may still derive other accompanying drawings from these accompanying drawings without creative efforts.
FIG. 1 is a diagram of a structure of a communication system according to an embodiment of this application;
FIG. 2 is a diagram of a structure of another communication system according to an embodiment of this application;
FIG. 3 is a schematic flowchart of a cloud computing technology-based virtual instance configuration method according to an embodiment of this application;
FIG. 4 is a schematic flowchart of another cloud computing technology-based virtual instance configuration method according to an embodiment of this application;
FIG. 5 is a diagram of a structure of a cloud management platform according to an embodiment of this application;
FIG. 6 is a diagram of a structure of a cloud management platform according to an embodiment of this application;
FIG. 7 is a diagram of a structure of a computing device according to an embodiment of this application;
FIG. 8 is a diagram of a structure of a computing device cluster according to an embodiment of this application;
FIG. 9 is a diagram of a structure of another computing device cluster according to an embodiment of this application;
FIG. 10 is a diagram of a structure of still another computing device cluster according to an embodiment of this application; and
FIG. 11 is a diagram of a structure of a chip according to an embodiment of this application.

### DESCRIPTION OF EMBODIMENTS

The following clearly and completely describes technical solutions of embodiments of this application with reference to accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of embodiments of this application.

The term "and/or" in this specification describes only an association relationship for describing associated objects and represents that three relationships may exist. For example, A and/or B may represent the following three cases: Only A exists, both A and B exist, and only B exists.

In this specification and the accompanying drawings of embodiments of this application, the terms "first", "second", and the like are intended to distinguish between different objects or distinguish between different processing of a same object, but do not indicate a particular order of the objects.

In addition, the terms "including", "having", and any other variants thereof mentioned in descriptions of embodiments of this application are intended to cover a non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device.

It should be noted that, in descriptions of embodiments of this application, terms such as "example" or "for example" are used to represent giving an example, an illustration, or a description. Any embodiment or design solution described as "example" or "for example" in embodiments of this application should not be construed as being more preferential or advantageous than other embodiments or design solutions. Exactly, use of the word "example", "for example", or the like is intended to present a relative concept in a specific manner.

First, terms used in embodiments of this application are explained and described.

Tenant: The tenant is a user who rents an infrastructure. The tenant may register an account on a cloud management platform operated by a public cloud service provider through a browser or another client. The public cloud service provider records accounts of different tenants, and isolates public cloud services of different tenants based on the accounts.

Cloud management platform: The cloud management platform is a platform provided by a public cloud service provider for interacting with a user. The user may register an account on the cloud management platform and rent a public cloud service by using the account, to become a tenant of the public cloud service. The cloud management platform is further used to manage an infrastructure, and isolate, based on accounts of different tenants, computing, network, and/or storage resources rented by different tenants.

Infrastructure: The infrastructure is a facility that supports a cloud computing service, including at least one data center. Each data center includes a plurality of servers, and computing instances such as a virtual machine or a container run on the servers to implement an elastic cloud computing service. For example, when the infrastructure includes a plurality of data centers, the plurality of data centers may be disposed in different geographical regions in a distributed manner, and the data centers are remotely connected to each other through a backbone network.

Virtual instance: The virtual instance is an instance that is deployed in a cloud data center in an availability zone in a region and that is used to run a public cloud service. The virtual instance is an instance used to provide computing, network, or storage resources. The virtual instance includes but is not limited to, for example, a virtual machine or a container.

Container: A container technology is a lightweight virtualization technology used to share server resources. A container may provide a virtual execution environment for a process, and one virtual execution environment is one container. A container image is a read-only special file system that provides a program, a library, a resource, and a configuration required for operating a container, and does not include any dynamic data. A container management system may distribute and run a container based on a container image, or convert a container into a container image and save the container image.

Image: The image (like Docker Image) is a file storage form. The image is a lightweight and independently executable software package of an application, includes all files required for starting a container corresponding to the image, for example, code, system tools, libraries, and environment variables. For another example, the image may include a complete operating system environment and other applications required by a user. In addition, the image is a set of read-only layers of a file, and is formed by superimposing a plurality of read-only image layers. Each image layer includes several files and metadata.

A docker image can be created by pulling an existing image from an official docker repository. Images in the official docker repository are maintained by an original manufacturer and can be updated and maintained in time. In some possible embodiments, the image may be customized. For example, the docker image may be created by using a Dockerfile. The Dockerfile is a configuration file for customizing image content, and can also reflect a hierarchical relationship establishment relationship in content.

A container is explained from a perspective of the image: The container is generated based on the image and is an operating instance of the image. In other words, the image is a static perspective of the container, and the container is an operating status of the image. The container is similar to a software container. Any software and library files can be installed in the container, and any operating environment can be configured. The container is an isolation technology based on operating system capabilities. The container has a file system, a CPU, and a memory, which means that the container can run independently like a virtual machine, but occupies less resources, greatly improving resource utilization. Containers are isolated from each other and do not affect each other.

With development of cloud computing, serverless computing is gradually popularized. The serverless computing breaks down an original application and provides more fine-grained service scheduling. Resources are only occupied to call services when requests arrive, and no resource is occupied when there is no request. Fees are charged based on a quantity of calling times and duration. In comparison with a conventional online service mode, the serverless computing greatly reduces use costs for a user, allowing the user to completely ignore server configuration issues. This simplifies development, and provides better scalability than a conventional online service.

In a related technology, a virtual instance is a main resource isolation solution used by a serverless computing service. In addition, data centers are evolving to separate data centers. The separate data center is a data center architecture in which various resources are highly intensive and interconnected via a high-speed network. In this way, cloud computing costs can be greatly reduced.

However, in the current serverless computing, an operating mode of the virtual instance is directly applied to the separate data center, and performance of the virtual instance cannot be fully utilized, which causes high costs.

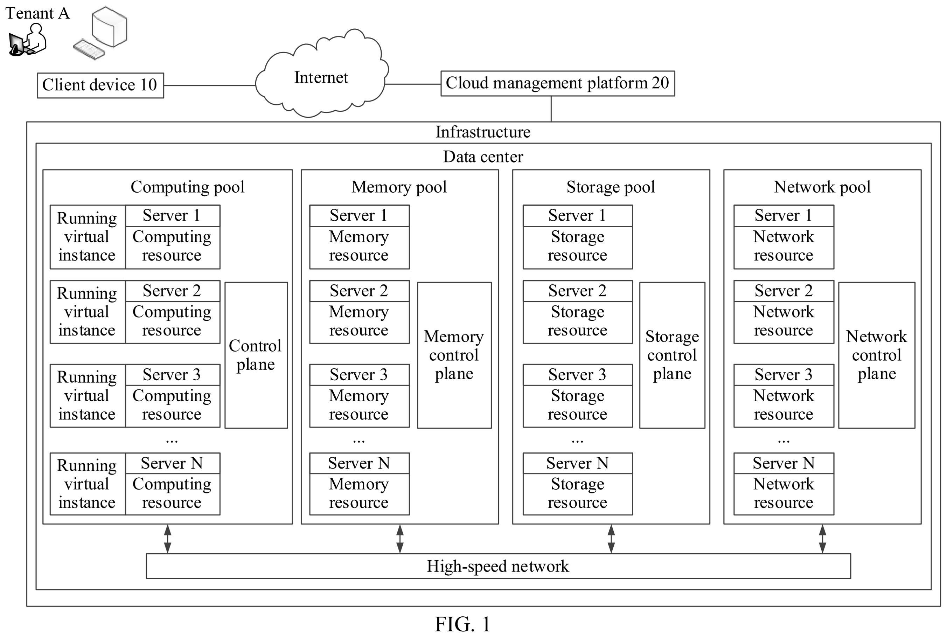

Therefore, an embodiment of this application provides a cloud computing technology-based virtual instance configuration method, to reduce operating costs of a virtual instance. The method is applicable to a communication system. FIG. 1 shows a possible existence form of the communication system.

As shown in FIG. 1, the communication system includes a client device 10, a cloud management platform 20, and an infrastructure 30.

The cloud management platform 20 is used to manage the infrastructure 30 that provides a computing service. A tenant connects to the Internet via the client device 10 and logs in to the cloud management platform 20 by using an account that is bound to the tenant and that is pre-registered on the cloud management platform 20. The cloud management platform 20 provides a configuration interface, to configure a virtual instance operating in the infrastructure.

In a possible implementation, the infrastructure 30 may include a data center, and the data center includes a computing pool, a memory pool, a storage pool, and a network pool that are separately disposed.

The computing pool includes at least one server configured to provide a computing resource, the memory pool includes at least one server configured to provide a memory resource, the storage pool includes at least one server configured to provide a storage resource, the network pool includes at least one server configured to provide a network resource, and the computing pool, the memory pool, the storage pool, and the network pool are connected via a high-speed network.

As shown in FIG. 1, in a possible implementation, a plurality of processor cores are disposed in each server in the computing pool, the computing resource includes the plurality of processor cores, a plurality of memories are disposed in each server in the memory pool, the memory resource includes the plurality of memories, each server in the storage pool includes a plurality of hard disks, the storage resource includes the plurality of hard disks, each server in the network pool includes a plurality of network interface cards, and the network resource includes the plurality of network interface cards.

Optionally, the data center may further include control plane, a memory control plane, a storage control plane, and a network control plane.

The control plane is deployed in the computing pool, and is used to manage runtime of a plurality of virtual instances to create a virtual instance and maintain a life cycle, establish connections (via the high-speed network) between the created virtual instance and the other three types of resource pools, configure parameters of remaining components, and adjust a size and a type of a computing resource of the virtual instance. For example, the control plane may be deployed on a server in the computing pool.

The memory control plane is deployed in the memory pool, and is used to manage a size and a type of a memory resource of the virtual instance, and maintain a corresponding virtual instance connection. For example, the memory control plane may be deployed on a server in the computing pool.

The storage control plane is deployed in the storage pool, and is used to manage a size and a type of a memory resource of the virtual instance, and maintain a corresponding virtual instance connection. For example, the storage control plane may be deployed on a server of the storage control plane.

The network control plane is deployed in the network pool, and is used to manage a size of a network resource of the virtual instance, a binding relationship between the virtual instance and the network interface card, and a routing policy of the virtual instance. For example, the network control plane may be deployed on a server in the network pool.

In comparison with a centralized management plane, the distributed management plane can avoid performance damage to a maximum extent. For example, if content in the memory pool is exchanged in a plurality of media by using the centralized management plane (for example, in the computing pool), each exchange instruction encounters a delay, and memory usage of the virtual instance is affected.

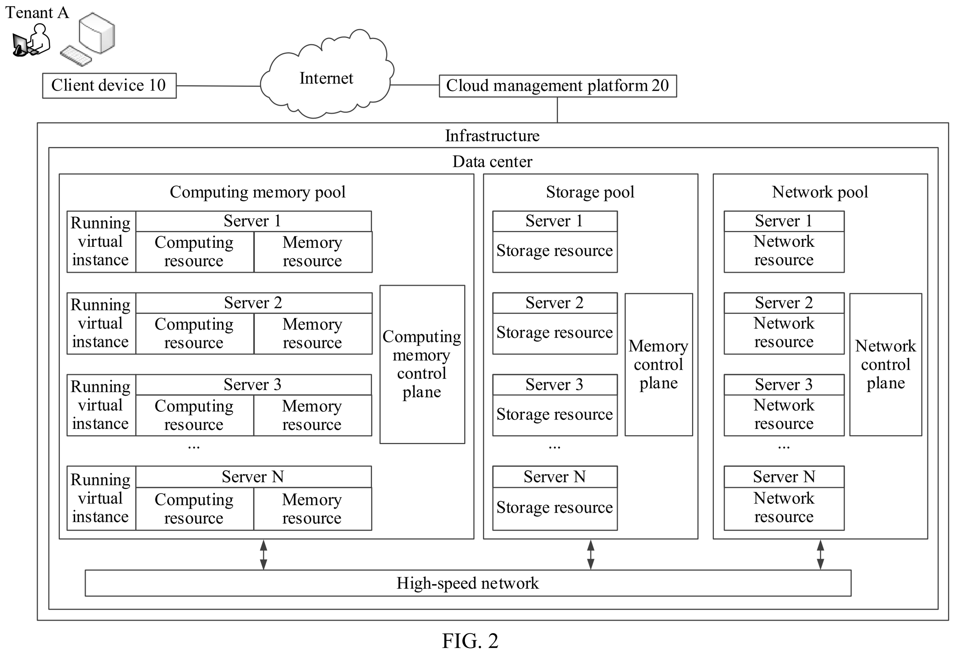

As shown in FIG. 2, in another possible implementation, the infrastructure includes a data center, the data center includes a computing memory pool, a storage pool, and a network pool that are separately disposed, the computing memory pool includes at least one server configured to provide a computing resource and a memory resource, the network pool includes at least one server configured to provide a network resource, and the computing memory pool, the storage pool, and the network pool are connected via a high-speed network.

In a possible implementation, a plurality of processor cores are disposed in each server in the computing memory pool, and the computing resource includes the plurality of processor cores. A plurality of memories are disposed in each server in the computing memory pool, and the memory resource includes the plurality of memories. Each server in the storage pool includes a plurality of hard disks, and the storage resource includes the plurality of hard disks. Each server in the network pool includes a plurality of network interface cards, and the network resource includes the plurality of network interface cards.

Optionally, the data center may further include computing memory control plane deployment, a memory control plane, a storage control plane, and a network control plane.

The computing memory control plane is deployed in the computing memory pool, and is used to manage runtime of a plurality of virtual instances to create a virtual instance and maintain a life cycle, establish connections between the created virtual instance (via the high-speed network) and the other three types of resource pools, configure parameters of remaining components, adjust a size and a type of a computing resource of the virtual instance, manage a size and a type of a memory resource of the virtual instance, and maintain a corresponding virtual instance connection. For example, the computing memory control plane may be deployed on a server in the computing memory pool.

The storage control plane is deployed in the storage pool, and is used to manage a size and a type of a memory resource of the virtual instance, and maintain a corresponding virtual instance connection. For example, the storage control plane may be deployed on a server of the storage control plane.

The network control plane is deployed in the network pool, and is used to manage a size of a network resource of the virtual instance, a binding relationship between the virtual instance and the network interface card, and a routing policy of the virtual instance. For example, the network control plane may be deployed on a server in the network pool.

It can be seen that, the infrastructure provided in this embodiment of this application includes the data center, and the data center includes the computing pool, the memory pool, the storage pool, and the network pool that are separately disposed. The computing pool includes the at least one server configured to provide the computing resource, the memory pool includes the at least one server configured to provide the memory resource, the storage pool includes the at least one server configured to provide the storage resource, the network pool includes the at least one server configured to provide the network resource, and the computing pool, the memory pool, the storage pool, and the network pool are connected via the high-speed network. In this way, a resource-intensive cloud-native resource pool with high-speed interconnection is obtained. The resource-intensive cloud-native resource pool provides a low-cost and high-performance virtual instance resource pool.

In addition, the cloud management platform is configured to manage the infrastructure that provides the computing service, and implement virtual instance resource management in a distributed manner.

Optionally, the plurality of processor cores may include a first processor core and a second processor core. Computing performance of the first processor core is higher than computing performance of the second processor core. The first processor core and the second processor core may be different cores of a same processor, or may be cores of different processors. The computing performance includes but is not limited to a dominant frequency size, an external frequency size, a bus frequency, a frequency multiplication coefficient, a quantity of cache levels, or a cache size of the processor core.

Optionally, the plurality of memories may include a first memory module and a second memory module. Memory performance of the first memory module is higher than memory performance of the second memory module. The memory performance includes but is not limited to a read/write speed of the memory module, a delay of the memory module, a data width of the memory module, a bandwidth of the memory module, or a working frequency of the memory module.

For example, the first memory module may be a dynamic random access memory (dynamic random access memory, DRAM), and the second memory module may be a storage class memory (storage class memory, SCM).

Optionally, the plurality of hard disks may include a first hard disk and a second hard disk. Storage performance of the first hard disk is higher than storage performance of the second hard disk. The storage performance includes but is not limited to a read/write speed of the hard disk, a delay of the hard disk, a data width of the hard disk, or a bandwidth of the hard disk.

For example, the first hard disk may be a solid state drive (solid state drive, SSD), and the second hard disk may be a hard disk drive (hard disk drive, HDD).

Optionally, the high-speed network may include an RDMA network, a CXL network, or an NVMe network.

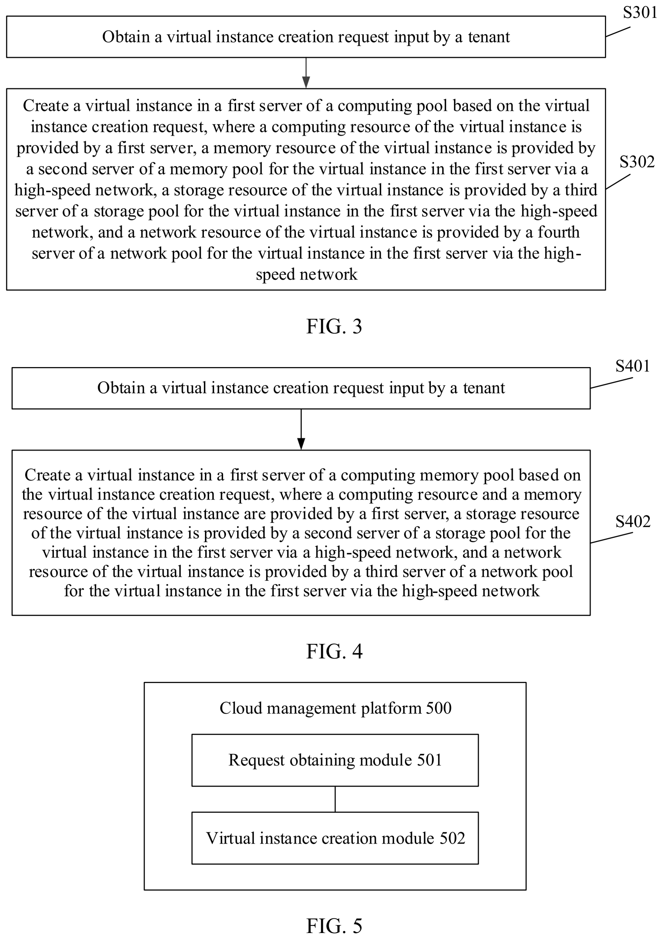

FIG. 3 shows a cloud computing technology-based virtual instance configuration method according to an embodiment of this application. The method is applicable to the communication system shown in FIG. 1. As shown in FIG. 3, the method includes the following steps.

S301: Obtain a virtual instance creation request input by a tenant.

The virtual instance creation request carries specification configuration information of a virtual instance. The specification configuration information indicates a computing resource, a memory resource, a storage resource, and a network resource that are required by the virtual instance.

For example, the tenant may connect to the Internet via a client device and logs in to a cloud management platform by using an account that is bound to the tenant and that is pre-registered on the cloud management platform. The cloud management platform provides a configuration interface, and inputs, to the cloud management platform, the virtual instance creation request that carries the specification configuration information of the virtual instance.

In a possible implementation, the specification configuration information specifically indicates a size or a type of the computing resource, a size or a type of the memory resource, a size or a type of the storage resource, and a size or a type of the network resource that are required by the virtual instance.

S302: Create the virtual instance in a first server of a computing pool based on the virtual instance creation request.

The computing resource of the virtual instance is provided by the first server. The memory resource of the virtual instance is provided by a second server of a memory pool for the virtual instance in the first server via a high-speed network. The storage resource of the virtual instance is provided by a third server of a storage pool for the virtual instance in the first server via the high-speed network. The network resource of the virtual instance is provided by a fourth server of a network pool for the virtual instance in the first server via the high-speed network.

For example, after receiving the virtual instance creation request input by the tenant, the cloud management platform indicates, based on the specification configuration information, the first server of the computing pool to provide the computing resource required for creating the virtual instance, to deploy a resource related to an operating process of the virtual instance in the first server; indicates, based on the specification configuration information, the second server of the memory pool to provide, via the high-speed network, the memory resource required for creating the virtual instance in the first server, to mount a memory of the virtual instance; indicates, based on the specification configuration information, the third server of the storage pool to provide, via the high-speed network, the storage resource required for creating the virtual instance in the first server, to mount a file system of the virtual instance; and then indicates, based on the specification configuration information, the fourth server of the network pool to provide, via the high-speed network, the network resource required for creating the virtual instance in the first server, to process virtual instance traffic (north-south traffic) entering and leaving a system and access traffic (east-west traffic) between virtual instances.

It can be learned that, according to the virtual instance configuration method provided in this embodiment of this application, operating resources (namely, the computing resource, the memory resource, the storage resource, and the network resource) of the virtual instance may be dynamically configured based on the specification configuration information that is of the virtual instance and that is carried in the virtual instance creation request. In comparison with a case in which high-performance operating resources are fixedly configured when the virtual instance is created, dynamically configuring the operating resources of the virtual instance based on the specification configuration information that is of the virtual instance and that is carried in the virtual instance creation request can reduce operating costs of the virtual instance.

Optionally, the virtual instance includes a virtual machine or a container.

It can be learned that, according to the virtual instance configuration method provided in this embodiment of this application, operating resources (namely, the computing resource, the memory resource, the storage resource, and the network resource) of the virtual machine or the container may be dynamically configured based on the specification configuration information that is of the virtual instance and that is carried in the virtual instance creation request. In comparison with a case in which high-performance operating resources are fixedly configured when the virtual machine or the container is created, dynamically configuring the operating resources of the virtual machine or the container based on the specification configuration information that is of the virtual instance and that is carried in the virtual instance creation request can reduce operating costs of the virtual machine or the container.

The method provided in this embodiment of this application may further include the following steps.

S303: Obtain a virtual instance specification adjustment request.

The virtual instance specification adjustment request indicates the cloud management platform to adjust a size of one or sizes of any combination of the computing resource, the memory resource, the storage resource, and the network resource that are provided for the virtual instance.

For example, the tenant may connect to the Internet via a client device and logs in to a cloud management platform by using an account that is bound to the tenant and that is pre-registered on the cloud management platform. A configuration interface is provided by the cloud management platform, and the virtual instance specification adjustment request is input to the cloud management platform.

For another example, the cloud management platform may trigger the virtual instance specification adjustment request according to a preset rule (for example, a rule set by the tenant).

For example, when computing resource utilization of the virtual instance is greater than a first threshold (for example, the computing resource utilization of the virtual instance is greater than 80%), the virtual instance specification adjustment request is triggered to increase computing resources of the virtual instance (for example, increasing a quantity of processor cores or adjusting the processor core of the virtual instance from a second processor core with low computing performance to a first processor core with high computing performance).

When computing resource utilization of the virtual instance is less than a second threshold (for example, the computing resource utilization of the virtual instance is less than 40%), the virtual instance specification adjustment request is triggered to decrease a quantity of computing resources of the virtual instance (for example, decreasing a quantity of processor cores or adjusting the processor core of the virtual instance from a second processor core with high computing performance to a first processor core with low computing performance).

For another example, when memory resource utilization or a memory access frequency of the virtual instance is greater than a third threshold (for example, the memory resource utilization of the virtual instance is greater than 85%), the virtual instance specification adjustment request is triggered to increase a quantity of memory resources of the virtual instance (for example, increasing a quantity of memories or adjusting the memory module of the virtual instance from a second memory module (for example, an SCM) with low memory performance to a first memory module (for example, a DRAM) with high memory performance).

When memory resource utilization or a memory access frequency of the virtual instance is less than a fourth threshold (for example, the memory resource utilization of the virtual instance is less than 35%), the virtual instance specification adjustment request is triggered to decrease a quantity of memory resources of the virtual instance (for example, decreasing a quantity of memories or adjusting the memory module of the virtual instance from a first memory module with high memory performance to a second memory module with low memory performance).

For another example, when storage resource utilization or a storage access frequency of the virtual instance is greater than a fifth threshold (for example, the storage resource utilization of the virtual instance is greater than 90%), the virtual instance specification adjustment request is triggered to increase a quantity of storage resources of the virtual instance (for example, increasing a quantity of hard disks or adjusting the hard disk of the virtual instance from a second hard disk with low storage performance (for example, an HDD) to a first hard disk with high storage performance (for example, an SDD)).

When storage resource utilization or a storage access frequency of the virtual instance is less than a sixth threshold (for example, the storage resource utilization of the virtual instance is less than 30%), the virtual instance specification adjustment request is triggered to decrease a quantity of storage resources of the virtual instance (for example, decreasing a quantity of hard disks or adjusting the hard disk of the virtual instance from a first hard disk with high storage performance to a second hard disk with low storage performance).

S304: Based on the virtual instance specification adjustment request, notify the first server to adjust a size of the computing resource provided for the virtual instance, notify the second server to adjust a size of the memory resource provided for the virtual instance via the high-speed network, notify the third server to adjust a size of the storage resource provided for the virtual instance via the high-speed network, and/or notify the fourth server to adjust a size of the network resource provided for the virtual instance via the high-speed network.

For example, when the computing resource utilization of the virtual instance is greater than the first threshold, the cloud management platform may notify, based on the virtual instance specification adjustment request, the first server to increase the quantity of computing resources of the virtual instance.

When the computing resource utilization of the virtual instance is less than the second threshold, the cloud management platform may notify, based on the virtual instance specification adjustment request, the first server to decrease the quantity of computing resources of the virtual instance.

For another example, when the memory resource utilization or the memory access frequency of the virtual instance is greater than the third threshold, the cloud management platform may notify, based on the virtual instance specification adjustment request, the second server to increase the quantity of memory resources provided for the virtual instance via the high-speed network.

When the memory resource utilization or the memory access frequency of the virtual instance is less than the fourth threshold, the cloud management platform may notify, based on the virtual instance specification adjustment request, the second server to decrease the quantity of memory resources provided for the virtual instance via the high-speed network.

For another example, when the storage resource utilization or the storage access frequency of the virtual instance is greater than the fifth threshold, the cloud management platform may notify, based on the virtual instance specification adjustment request, the third server to increase the quantity of storage resources provided for the virtual instance via the high-speed network.

When the storage resource utilization or the storage access frequency of the virtual instance is less than the sixth threshold, the cloud management platform may notify, based on the virtual instance specification adjustment request, the third server to decrease the quantity of storage resources provided for the virtual instance via the high-speed network.

For another example, when the network resource utilization of the virtual instance is greater than a seventh threshold, the cloud management platform may notify, based on the virtual instance specification adjustment request, the fourth server to increase the quantity of network resources provided for the virtual instance via the high-speed network.

When the network resource utilization of the virtual instance is less than an eighth threshold, the cloud management platform may notify, based on the virtual instance specification adjustment request, the fourth server to decrease the quantity of network resources provided for the virtual instance via the high-speed network.

It can be learned that, according to the virtual instance configuration method provided in this embodiment of this application, sizes of operating resources (namely, the computing resource, the memory resource, the storage resource, and the network resource) of the virtual instance may be further dynamically adjusted based on the adjustment request carried in the virtual instance adjustment request. In comparison with a case in which high-performance operating resources are fixedly configured for the virtual instance, dynamically adjusting the size of the operating resource of the virtual instance based on the adjustment request carried in the virtual instance adjustment request can reduce operating costs of the virtual instance.

In a possible implementation, the fourth server may be further notified to adjust the network interface card provided for the virtual instance via the high-speed network.

For example, when a destination virtual instance of the virtual instance changes, the cloud management platform may notify the fourth server to adjust the network interface card provided for the virtual instance via the high-speed network.

It may be understood that a destination network interface card of the network interface card of the virtual instance is dynamically changed based on a change of the destination virtual instance of the virtual instance, to implement dynamic reuse of the network interface card resource and reduce operating costs of the network interface card of the destination virtual instance, thereby reducing operating costs of the virtual instance.

In a possible implementation, in embodiments of this application, the virtual instance may be further marked by using a label or the like, and a transmission relationship between virtual instances is recorded by using the label. For example, each virtual instance has a fixed ID, and a next hop of each virtual instance and an accessible virtual instance ID list are both configured by a network control plane. When the virtual instance sends data, the virtual instance sends the data to a bound network interface card, the network interface card searches for an ID of the next-hop virtual instance and the corresponding bound network interface card based on an ID of the virtual instance, and directly sends the data to the corresponding network interface card. In this way, complex overlay (overlay) network protocol stack conversion can be avoided. The foregoing describes direct data transfer.

For transmission of a large amount of data, the control plane may further control the virtual instance to cache the data in the memory pool via the high-speed network, and transmit only a data storage address based on the foregoing procedure. In this way, after receiving the address, the destination virtual instance may directly access memory space based on the address, to reduce a transmission delay.

FIG. 4 shows another cloud computing technology-based virtual instance configuration method according to an embodiment of this application. The method is applicable to the communication system shown in FIG. 2. As shown in FIG. 4, the method includes the following steps.

S401: Obtain a virtual instance creation request input by a tenant.

The virtual instance creation request carries specification configuration information of the virtual instance, and the specification configuration information indicates a computing resource, a memory resource, a storage resource, and a network resource that are required by the virtual instance.

For example, the tenant may connect to the Internet via a client device and logs in to a cloud management platform by using an account that is bound to the tenant and that is pre-registered on the cloud management platform. The cloud management platform provides a configuration interface, and inputs, to the cloud management platform, the virtual instance creation request that carries the specification configuration information of the virtual instance.

In a possible implementation, the specification configuration information specifically indicates a size or a type of the computing resource, a size or a type of the memory resource, a size or a type of the storage resource, and a size or a type of the network resource that are required by the virtual instance.

S402: Create the virtual instance in a first server of a computing memory pool based on the virtual instance creation request.

The computing resource and the memory resource of the virtual instance are provided by the first server, the storage resource of the virtual instance is provided by a second server of the storage pool for the virtual instance in the first server via a high-speed network, and the network resource of the virtual instance is provided by a third server of the network pool for the virtual instance in the first server via the high-speed network.

For example, after receiving the virtual instance creation request input by the tenant, the cloud management platform indicates, based on the specification configuration information, the first server of the computing memory pool to provide the computing resource required for creating the virtual instance, to deploy a resource related to an operating process of the virtual instance in the first server, and provide the memory resource required for creating the virtual instance, to mount a memory of the virtual instance; indicates, based on the specification configuration information, the second server of the storage pool to provide, via the high-speed network, the storage resource required for creating the virtual instance in the first server, to mount a file system of the virtual instance; and then indicates, based on the specification configuration information, the third server of the network pool to provide, via the high-speed network, the network resource required for creating the virtual instance in the first server, to process virtual instance traffic entering and leaving a system and access traffic between virtual instances.

It can be learned that, according to the virtual instance configuration method provided in this embodiment of this application, operating resources (namely, the computing resource, the memory resource, the storage resource, and the network resource) of the virtual instance may be dynamically configured based on the specification configuration information that is of the virtual instance and that is carried in the virtual instance creation request. In comparison with a case in which high-performance operating resources are fixedly configured when the virtual instance is created, dynamically configuring the operating resources of the virtual instance based on the specification configuration information that is of the virtual instance and that is carried in the virtual instance creation request can reduce operating costs of the virtual instance.

Optionally, the virtual instance includes a virtual machine or a container.

It can be learned that, according to the virtual instance configuration method provided in this embodiment of this application, operating resources (namely, the computing resource, the memory resource, the storage resource, and the network resource) of the virtual machine or the container may be dynamically configured based on the specification configuration information that is of the virtual instance and that is carried in the virtual instance creation request. In comparison with a case in which high-performance operating resources are fixedly configured when the virtual machine or the container is created, dynamically configuring the operating resources of the virtual machine or the container based on the specification configuration information that is of the virtual instance and that is carried in the virtual instance creation request can reduce operating costs of the virtual machine or the container.

The method provided in this embodiment of this application may further include the following steps.

S403: Obtain a virtual instance specification adjustment request.

The virtual instance specification adjustment request indicates the cloud management platform to adjust a size of one or sizes of any combination of the computing resource, the memory resource, the storage resource, and the network resource that are provided for the virtual instance.

For example, the tenant may connect to the Internet via a client device and logs in to a cloud management platform by using an account that is bound to the tenant and that is pre-registered on the cloud management platform. A configuration interface is provided by the cloud management platform, and the virtual instance specification adjustment request is input to the cloud management platform.

For another example, the cloud management platform may trigger the virtual instance specification adjustment request according to a preset rule (for example, a rule set by the tenant).

For example, when computing resource utilization of the virtual instance is greater than a first threshold (for example, 80%), the virtual instance specification adjustment request is triggered to increase a quantity of computing resources of the virtual instance (for example, increasing a quantity of processor cores or adjusting a processor core of the virtual instance from a second processor core with low computing performance to a first processor core with high computing performance).

When computing resource utilization of the virtual instance is less than a second threshold (for example, 40%), the virtual instance specification adjustment request is triggered to decrease a quantity of computing resources of the virtual instance (for example, decreasing a quantity of processor cores or adjusting a processor core of the virtual instance from a second processor core with high computing performance to a first processor core with low computing performance).

It should be noted that the first threshold and the second threshold are merely for ease of description. During actual application, a threshold related to computing resource adjustment may include more or fewer thresholds. This is not limited in embodiments of this application.

For another example, when memory resource utilization or a memory access frequency of the virtual instance is greater than a third threshold (for example, 85%), the virtual instance specification adjustment request is triggered to increase a quantity of memory resources of the virtual instance (for example, increasing a quantity of memories or adjusting a memory module of the virtual instance from a second memory module (for example, an SCM) with low memory performance to a first processing module (for example, a DRAM) with high memory performance).

When memory resource utilization or a memory access frequency of the virtual instance is less than a fourth threshold (for example, 35%), the virtual instance specification adjustment request is triggered to decrease a quantity of memory resources of the virtual instance (for example, decreasing a quantity of memories or adjusting a memory module of the virtual instance from a first memory module with high memory performance to a second memory module with low memory performance).

It should be noted that the third threshold and the fourth threshold are merely for ease of description. During actual application, a threshold related to memory resource adjustment may include more or fewer thresholds. This is not limited in embodiments of this application.

For another example, when storage resource utilization or a storage access frequency of the virtual instance is greater than a fifth threshold (for example, 90%), the virtual instance specification adjustment request is triggered to increase a quantity of storage resources of the virtual instance (for example, increasing a quantity of hard disks or adjusting a hard disk of the virtual instance from a second hard disk with low storage performance (for example, an HDD) to a first hard disk with high storage performance (for example, an SDD)).

When storage resource utilization or a storage access frequency of the virtual instance is less than a sixth threshold (for example, 30%), the virtual instance specification adjustment request is triggered to decrease a quantity of storage resources of the virtual instance (for example, decreasing a quantity of hard disks or adjusting a hard disk of the virtual instance from a first hard disk with high storage performance to a second hard disk with low storage performance).

It should be noted that the fifth threshold and the sixth threshold are merely for ease of description. During actual application, a threshold related to storage resource adjustment may include more or fewer thresholds. This is not limited in embodiments of this application.

S404: Based on the virtual instance specification adjustment request, notify the first server to adjust a size of the computing resource provided for the virtual instance, notify the first server to adjust a size of the memory resource provided for the virtual instance via the high-speed network, notify the second server to adjust a size of the storage resource provided for the virtual instance via the high-speed network, and/or notify the third server to adjust a size of the network resource provided for the virtual instance via the high-speed network.

For example, when the computing resource utilization of the virtual instance is greater than the first threshold, the cloud management platform may notify, based on the virtual instance specification adjustment request, the first server to increase the quantity of computing resources of the virtual instance.

When the computing resource utilization of the virtual instance is less than the second threshold, the cloud management platform may notify, based on the virtual instance specification adjustment request, the first server to decrease the quantity of computing resources of the virtual instance.

For another example, when the memory resource utilization or the memory access frequency of the virtual instance is greater than the third threshold, the cloud management platform may notify, based on the virtual instance specification adjustment request, the first server to increase the quantity of memory resources provided for the virtual instance via the high-speed network.

When the memory resource utilization or the memory access frequency of the virtual instance is less than the fourth threshold, the cloud management platform may notify, based on the virtual instance specification adjustment request, the first server to decrease the quantity of memory resources provided for the virtual instance via the high-speed network.

For another example, when the storage resource utilization or the storage access frequency of the virtual instance is greater than the fifth threshold, the cloud management platform may notify, based on the virtual instance specification adjustment request, the second server to increase the quantity of storage resources provided for the virtual instance via the high-speed network.

When the storage resource utilization or the storage access frequency of the virtual instance is less than the sixth threshold, the cloud management platform may notify, based on the virtual instance specification adjustment request, the second server to decrease the quantity of storage resources provided for the virtual instance via the high-speed network.

For another example, when the network resource utilization of the virtual instance is greater than a seventh threshold, the cloud management platform may notify, based on the virtual instance specification adjustment request, the third server to increase the quantity of network resources provided for the virtual instance via the high-speed network.

When the network resource utilization of the virtual instance is less than an eighth threshold, the cloud management platform may notify, based on the virtual instance specification adjustment request, the third server to decrease the quantity of network resources provided for the virtual instance via the high-speed network.

It should be noted that the seventh threshold and the eighth threshold are merely for ease of description. During actual application, a threshold related to storage resource adjustment may include more or fewer thresholds. This is not limited in embodiments of this application.

It can be learned that, according to the virtual instance configuration method provided in this embodiment of this application, sizes of operating resources (namely, the computing resource, the memory resource, the storage resource, and the network resource) of the virtual instance may be further dynamically adjusted based on the adjustment request carried in the virtual instance adjustment request. In comparison with a case in which high-performance operating resources are fixedly configured for the virtual instance, dynamically adjusting the size of the operating resource of the virtual instance based on the adjustment request carried in the virtual instance adjustment request can reduce operating costs of the virtual instance.

The following describes, with reference to FIG. 5, a cloud management platform used to perform the foregoing cloud computing technology-based virtual instance configuration method.

It may be understood that, to implement the foregoing functions, the cloud management platform includes a corresponding hardware and/or software module for performing each function. With reference to the example algorithm steps described in embodiments disclosed in this specification, embodiments of this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of embodiments of this application.

In embodiments of this application, the cloud management platform may be divided into functional modules based on the foregoing method examples. For example, each functional module may be obtained through division based on each corresponding function, or two or more functions may be integrated into one processing module. The integrated module may be implemented in a form of hardware. It should be noted that, in this embodiment, module division is an example, and is merely logical function division. During actual implementation, another division manner may be used.

When each function module is obtained through division based on each corresponding function, FIG. 5 is a possible composition diagram of the cloud management platform in the foregoing embodiment. As shown in FIG. 5, a cloud management platform 500 may include a request obtaining module 501 and a virtual instance creation module 502.

The request obtaining module 501 is configured to obtain a virtual instance creation request input by a tenant, where the virtual instance creation request carries specification configuration information of a virtual instance, and the specification configuration information indicates a computing resource, a memory resource, a storage resource, and a network resource that are required by the virtual instance.

The virtual instance creation module 502 is configured to create the virtual instance in a first server of a computing pool based on the virtual instance creation request, where the computing resource of the virtual instance is provided by the first server, the memory resource of the virtual instance is provided by a second server of a memory pool for the virtual instance in the first server via a high-speed network, the storage resource of the virtual instance is provided by a third server of a storage pool for the virtual instance in the first server via the high-speed network, and the network resource of the virtual instance is provided by a fourth server of a network pool for the virtual instance in the first server via the high-speed network.

In a possible implementation, the request obtaining module 501 is further configured to obtain a virtual instance specification adjustment request. The virtual instance specification adjustment request indicates the cloud management platform to adjust a size of one or sizes of any combination of the computing resource, the memory resource, the storage resource, and the network resource that are provided for the virtual instance.

In a possible implementation, the virtual instance creation module 502 is further configured to: based on the virtual instance specification adjustment request, notify the first server to adjust a size of the computing resource provided for the virtual instance, notify the second server to adjust a size of the memory resource provided for the virtual instance via the high-speed network, notify the third server to adjust a size of the storage resource provided for the virtual instance via the high-speed network, and/or notify the fourth server to adjust a size of the network resource provided for the virtual instance via the high-speed network.

In a possible implementation, a plurality of processor cores are disposed in each server in the computing pool, the computing resource includes the plurality of processor cores, a plurality of memories are disposed in each server in the memory pool, the memory resource includes the plurality of memories, each server in the storage pool includes a plurality of hard disks, the storage resource includes the plurality of hard disks, each server in the network pool includes a plurality of network interface cards, and the network resource includes the plurality of network interface cards.

In a possible implementation, the virtual instance includes a virtual machine or a container.

In a possible implementation, the high-speed network includes an RDMA network, a CXL network, or an NVMe network.

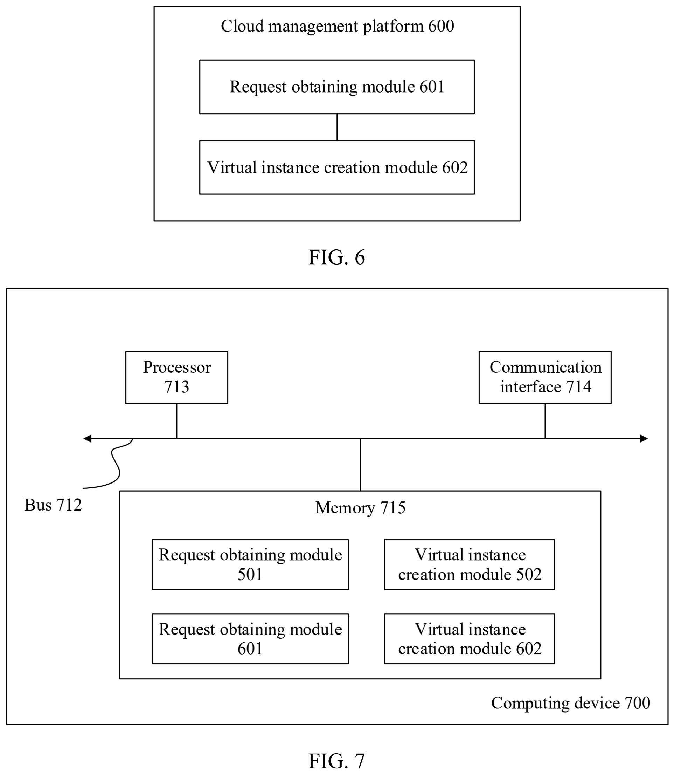

When each function module is obtained through division based on each corresponding function, FIG. 6 is a possible composition diagram of the cloud management platform in the foregoing embodiment. As shown in FIG. 6, a cloud management platform 600 may include a request obtaining module 601 and a virtual instance creation module 602.

The request obtaining module 601 is configured to obtain a virtual instance creation request input by a tenant, where the virtual instance creation request carries specification configuration information of a virtual instance, and the specification configuration information indicates a computing resource, a memory resource, a storage resource, and a network resource that are required by the virtual instance.

The virtual instance creation module 602 is configured to create the virtual instance in a first server of a computing memory pool based on the virtual instance creation request, where the computing resource and the memory resource of the virtual instance are provided by the first server, the storage resource of the virtual instance is provided by a second server of a storage pool for the virtual instance in the first server via a high-speed network, and the network resource of the virtual instance is provided by a third server of a network pool for the virtual instance in the first server via the high-speed network.

In a possible implementation, the request obtaining module 601 is further configured to obtain a virtual instance specification adjustment request. The virtual instance specification adjustment request indicates the cloud management platform to adjust a size of one or sizes of any combination of the computing resource, the memory resource, the storage resource, and the network resource that are provided for the virtual instance.

In a possible implementation, the virtual instance creation module 602 is further configured to: based on the virtual instance specification adjustment request, notify the first server to adjust a size of the computing resource provided for the virtual instance, notify the first server to adjust a size of the memory resource provided for the virtual instance via the high-speed network, notify the second server to adjust a size of the storage resource provided for the virtual instance via the high-speed network, and/or notify the third server to adjust a size of the network resource provided for the virtual instance via the high-speed network.

In a possible implementation, a plurality of processor cores are disposed in each server in the computing memory pool, the computing resource includes the plurality of processor cores, a plurality of memories are disposed in each server in the computing memory pool, the memory resource includes the plurality of memories, each server in the storage pool includes a plurality of hard disks, the storage resource includes the plurality of hard disks, each server in the network pool includes a plurality of network interface cards, and the network resource includes the plurality of network interface cards.

In a possible implementation, the virtual instance includes a virtual machine or a container.

In a possible implementation, the high-speed network includes an RDMA network, a CXL network, or an NVMe network.

An embodiment of this application provides a computing device. FIG. 7 is a diagram of a structure of a computing device according to an embodiment of the present invention. A computing device 700 includes a bus 712, a processor 713, a memory 715, and a communication interface 714. The processor 713, the memory 715, and the communication interface 714 communicate with each other through the bus 712. The computing device 700 may be a server or a terminal device. It should be understood that quantities of processors and memories in the computing device 700 are not limited in this application.

The bus 12 may be a peripheral component interconnect (peripheral component interconnect, PCI) bus, an extended industry standard architecture (extended industry standard architecture, EISA) bus, or the like. The bus may be classified as an address bus, a data bus, a control bus, and the like. For ease of representation, the bus is represented by using only one line in FIG. 7, but this does not mean that there is only one bus or only one type of bus. The bus 712 may include a path for transmitting information between components (for example, the memory 715, the processor 713, and the communication interface 714) of the computing device 700.

The processor 713 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 715 may include a volatile memory (volatile memory), for example, a random access memory (random access memory, RAM). The processor 713 may further include a non-volatile memory (non-volatile memory), for example, a read-only memory (read-only memory, ROM), a flash memory, a hard disk drive (hard disk drive, HDD), or a solid state drive (solid state drive, SSD).

The memory 715 stores executable program code, and the processor 713 executes the executable program code to separately implement functions of one or more modules of the request obtaining module 501, the virtual instance creation module 502, the request obtaining module 601, and the virtual instance creation module 602, so that the cloud computing technology-based virtual instance configuration method is implemented. In other words, the memory 715 stores instructions used by the cloud management platform to perform the cloud computing technology-based virtual instance configuration method.

The communication interface 714 uses, for example, but not limited to, a transceiver module like a network interface card or a transceiver, to implement communication between the computing device 700 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device like a desktop computer, a notebook computer, or a smartphone.

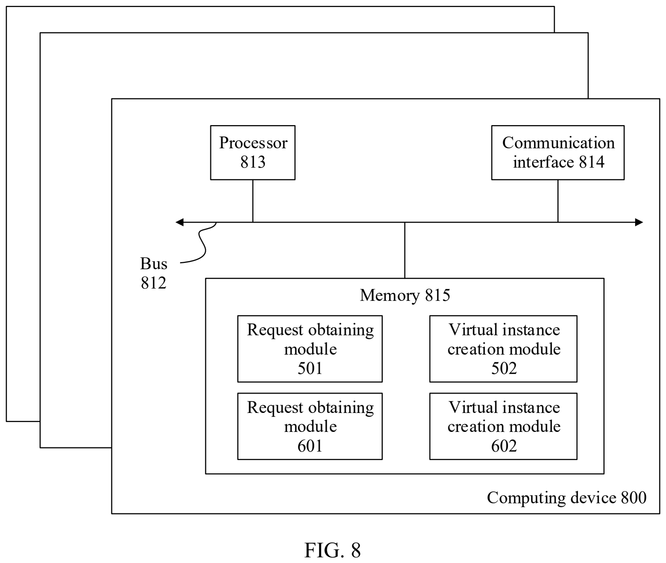

FIG. 8 is a diagram of a structure of a computing device cluster according to an embodiment of this application. As shown in FIG. 8, the computing device cluster includes at least one computing device 800. A memory 815 in one or more computing devices 800 in the computing device cluster may store same cloud management platform instructions used to perform the cloud computing technology-based virtual instance configuration method.

In some possible implementations, the one or more computing devices 800 in the computing device cluster may also be configured to execute some instructions of the cloud management platform for performing the cloud computing technology-based virtual instance configuration method. In other words, a combination of one or more computing devices 800 may jointly execute instructions used by the cloud management platform to perform the cloud computing technology-based virtual instance configuration method.

It should be noted that memories 815 in different computing devices 800 in the computing device cluster may store different instructions, to perform some functions of the cloud management platform. In other words, instructions stored in the memories 815 in different computing devices 800 may implement functions of one or more modules of the request obtaining module 501, the virtual instance creation module 502, the request obtaining module 601, and the virtual instance creation module 602.

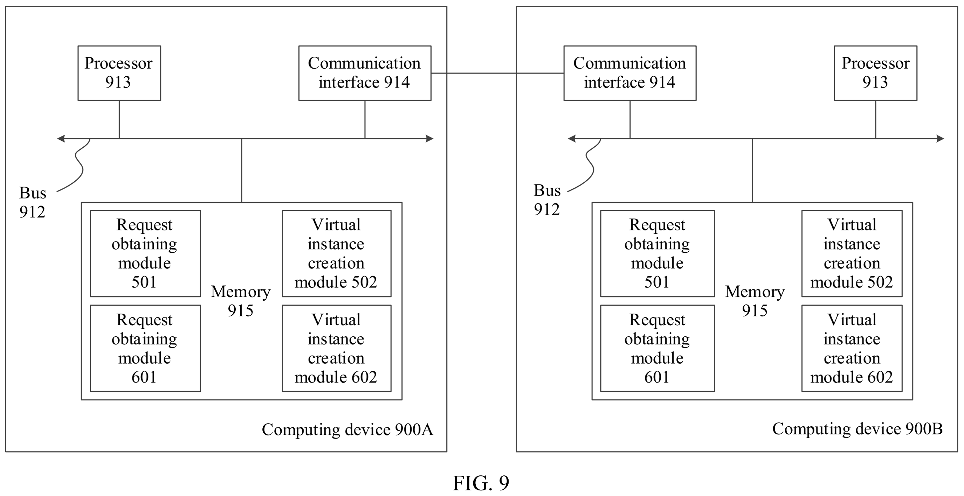

FIG. 9 is a diagram of a structure of another computing device cluster according to an embodiment of this application. As shown in FIG. 9, two computing devices 900A and 900B are connected through a communication interface 914. A memory in the computing device 900A stores instructions used to perform functions of one or more modules of the request obtaining module 501, the virtual instance creation module 502, the request obtaining module 601, and the virtual instance creation module 602. A memory in the computing device 900B stores instructions used to perform functions of one or more modules of the obtaining module 501, the virtual instance creation module 502, the request obtaining module 601, and the virtual instance creation module 602.

It should be understood that functions of the computing device 900A shown in FIG. 9 may alternatively be completed by a plurality of computing devices 900. Similarly, functions of the computing device 900B may alternatively be completed by a plurality of computing devices 900.

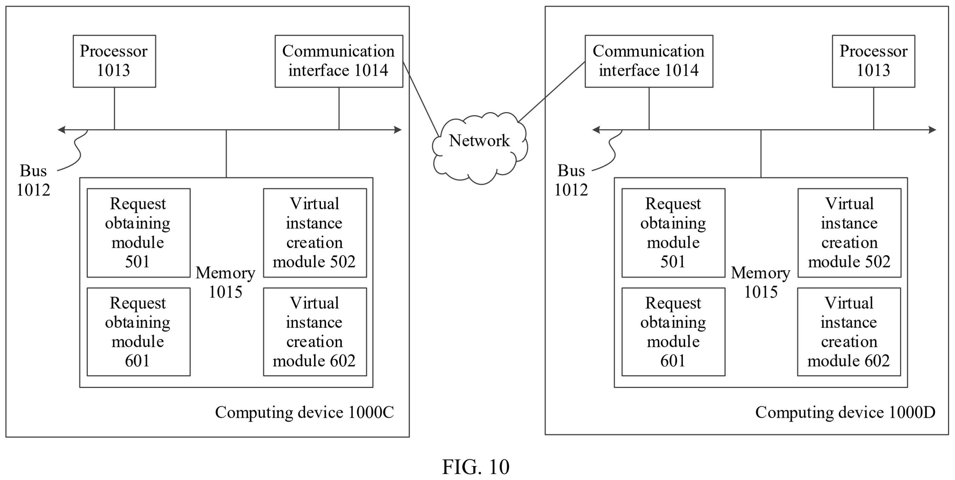

FIG. 10 is a diagram of a structure of still another computing device cluster according to an embodiment of this application. In some possible implementations, one or more computing devices in the computing device cluster may be connected through a network. The network may be a wide area network, a local area network, or the like. FIG. 10 shows a possible implementation. As shown in FIG. 10, two computing devices 1000C and 1000D are connected through a network. Specifically, the computing device is connected to the foregoing network through a communication interface in each computing device. In this possible implementation, a memory 1015 in the computing device 1000C stores instructions used to perform functions of one or more modules of the obtaining module 501, the virtual instance creation module 502, the request obtaining module 601, and the virtual instance creation module 602. In addition, the memory 1015 in the computing device 1000D stores instructions used to perform functions of one or more modules of the obtaining module 501, the virtual instance creation module 502, the request obtaining module 601, and the virtual instance creation module 602.

It should be understood that functions of the computing device 1000C shown in FIG. 10 may alternatively be completed by a plurality of computing devices 1000. Similarly, functions of the computing device 1000D may alternatively be completed by a plurality of computing devices 1000.

In some possible implementations, the memory 1015 of each of the one or more computing devices 1000 in the computing device cluster may store some instructions used to perform the cloud computing technology-based virtual instance configuration method. In other words, a combination of one or more computing devices 1000 may jointly execute instructions used to perform the cloud computing technology-based virtual instance configuration method.

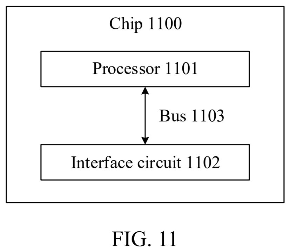

An embodiment of this application further provides a chip. FIG. 11 is a diagram of a structure of a chip 1100. The chip 1100 includes one or more processors 1101 and an interface circuit 1102. Optionally, the chip 1100 may further include a bus 1103.

The processor 1101 may be an integrated circuit chip and has a signal processing capability. In an implementation process, steps of the cloud computing technology-based virtual instance configuration method may be completed by using an integrated logic circuit of hardware in the processor 1101 or instructions in a form of software.

Optionally, the processor 1101 may be a general-purpose processor, a digital signal processor (digital signal processing, DSP), an application-specific integrated circuit (application-specific integrated circuit, ASIC), a field-programmable gate array (field-programmable gate array, FPGA) or another programmable logic device, a discrete gate or a transistor logic device, or a discrete hardware component. The processor may implement or perform the methods and steps disclosed in embodiments of this application. The general-purpose processor may be a microprocessor, or the processor may be any conventional processor or the like.

The interface circuit 1102 may be used to send or receive data, instructions, or information. The processor 1101 may process the data, the instructions, or other information received through the interface circuit 1102, and may send processed information through the interface circuit 1102.

Optionally, the chip further includes a memory. The memory may include a read-only memory and a random access memory, and provide operation instructions and data for the processor. A part of the memory may further include a non-volatile random access memory (non-volatile random access memory, NVRAM).

Optionally, the memory stores an executable software module or a data structure, and the processor may perform a corresponding operation by invoking the operation instructions stored in the memory (the operation instructions may be stored in an operating system).

Optionally, the chip may be used in the cloud management platform in embodiments of this application. Optionally, the interface circuit 1102 may be configured to output an execution result of the processor 1101. For the cloud computing technology-based virtual instance configuration method provided in one or more embodiments of embodiments of this application, refer to the foregoing embodiments. Details are not described herein again.

It should be noted that functions corresponding to each of the processor 1101 and the interface circuit 1102 may be implemented by using a hardware design, or may be implemented by using a software design, or may be implemented by using a combination of software and hardware. This is not limited herein.

An embodiment of this application further provides a cloud management platform. The platformincludes at least one processor. When the at least one processor executes program code or instructions, the foregoing related method steps are implemented to implement the cloud computing technology-based virtual instance configuration method in the foregoing embodiments.

Optionally, the apparatus may further include at least one memory, and the at least one memory is configured to store the program code or the instructions.

An embodiment of this application further provides a computer storage medium. The computer storage medium stores computer instructions. When the computer instructions are run on a cloud management platform, the cloud management platform performs the foregoing related method steps to implement the cloud computing technology-based virtual instance configuration method in the foregoing embodiments.

An embodiment of this application further provides a computer program product. When the computer program product runs on a computer, the computer is enabled to perform the foregoing related steps to implement the cloud computing technology-based virtual instance configuration method in the foregoing embodiments.

An embodiment of this application further provides a cloud management platform. The apparatus may be specifically a chip, an integrated circuit, a component, or a module. Specifically, the apparatus may include a connected processor and a memory configured to store instructions, or the apparatus includes at least one processor, configured to obtain instructions from an external memory. When the apparatus runs, the processor may execute the instructions, so that the chip performs the cloud computing technology-based virtual instance configuration method in the foregoing method embodiments.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps of the methods described in embodiments of this application. The storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A cloud computing technology-based virtual instance configuration method, wherein the method is applied to a cloud management platform, the cloud management platform is configured to manage an infrastructure that provides a computing service, the infrastructure comprises a data center, the data center comprises a computing pool, a memory pool, a storage pool, and a network pool that are separately disposed, the computing pool comprises at least one server configured to provide a computing resource, the memory pool comprises at least one server configured to provide a memory resource, the storage pool comprises at least one server configured to provide a storage resource, the network pool comprises at least one server configured to provide a network resource, the computing pool, the memory pool, the storage pool, and the network pool are connected via a high-speed network, and the method comprises:
obtaining a virtual instance creation request input by a tenant, wherein the virtual instance creation request carries specification configuration information of a virtual instance, and the specification configuration information indicates a computing resource, a memory resource, a storage resource, and a network resource that are required by the virtual instance; and
creating the virtual instance in a first server of the computing pool based on the virtual instance creation request, wherein the computing resource of the virtual instance is provided by the first server, the memory resource of the virtual instance is provided by a second server of the memory pool for the virtual instance in the first server via the high-speed network, the storage resource of the virtual instance is provided by a third server of the storage pool for the virtual instance in the first server via the high-speed network, and the network resource of the virtual instance is provided by a fourth server of the network pool for the virtual instance in the first server via the high-speed network.

2. The method according to claim 1, wherein the method further comprises:
obtaining a virtual instance specification adjustment request, wherein the virtual instance specification adjustment request indicates the cloud management platform to adjust a size of one or sizes of any combination of the computing resource, the memory resource, the storage resource, and the network resource that are provided for the virtual instance; and
based on the virtual instance specification adjustment request, notifying the first server to adjust a size of the computing resource provided for the virtual instance, notifying the second server to adjust a size of the memory resource provided for the virtual instance via the high-speed network, notifying the third server to adjust a size of the storage resource provided for the virtual instance via the high-speed network, and/or notifying the fourth server to adjust a size of the network resource provided for the virtual instance via the high-speed network.

3. The method according to claim 1 or 2, wherein a plurality of processor cores are disposed in each server in the computing pool, the computing resource comprises the plurality of processor cores, a plurality of memories are disposed in each server in the memory pool, the memory resource comprises the plurality of memories, each server in the storage pool comprises a plurality of hard disks, the storage resource comprises the plurality of hard disks, each server in the network pool comprises a plurality of network interface cards, and the network resource comprises the plurality of network interface cards.

4. The method according to any one of claims 1 to 3, wherein the virtual instance comprises a virtual machine or a container.

5. The method according to any one of claims 1 to 4, wherein the high-speed network comprises a remote direct memory access RDMA network, a compute express link CXL network, or a non-volatile memory express NVMe network.

6. A cloud computing technology-based virtual instance configuration method, wherein the method is applied to a cloud management platform, the cloud management platform is configured to manage an infrastructure that provides a computing service, the infrastructure comprises a data center, the data center comprises a computing memory pool, a storage pool, and a network pool that are separately disposed, the computing memory pool comprises at least one server configured to provide a computing resource and a memory resource, the network pool comprises at least one server configured to provide a network resource, the computing memory pool, the storage pool, and the network pool are connected via a high-speed network, and the method comprises:
obtaining a virtual instance creation request input by a tenant, wherein the virtual instance creation request carries specification configuration information of a virtual instance, and the specification configuration information indicates a computing resource, a memory resource, a storage resource, and a network resource that are required by the virtual instance; and
creating the virtual instance in a first server of the computing memory pool based on the virtual instance creation request, wherein the computing resource and the memory resource of the virtual instance are provided by the first server, the storage resource of the virtual instance is provided by a second server of the storage pool for the virtual instance in the first server via the high-speed network, and the network resource of the virtual instance is provided by a third server of the network pool for the virtual instance in the first server via the high-speed network.

7. The method according to claim 6, wherein the method further comprises:
obtaining a virtual instance specification adjustment request, wherein the virtual instance specification adjustment request indicates the cloud management platform to adjust a size of one or sizes of any combination of the computing resource, the memory resource, the storage resource, and the network resource that are provided for the virtual instance; and
based on the virtual instance specification adjustment request, notifying the first server to adjust a size of the computing resource provided for the virtual instance, notifying the first server to adjust a size of the memory resource provided for the virtual instance via the high-speed network, notifying the second server to adjust a size of the storage resource provided for the virtual instance via the high-speed network, and/or notifying the third server to adjust a size of the network resource provided for the virtual instance via the high-speed network.

8. The method according to claim 6 or 7, wherein a plurality of processor cores are disposed in each server in the computing memory pool, the computing resource comprises the plurality of processor cores, a plurality of memories are disposed in each server in the computing memory pool, the memory resource comprises the plurality of memories, each server in the storage pool comprises a plurality of hard disks, the storage resource comprises the plurality of hard disks, each server in the network pool comprises a plurality of network interface cards, and the network resource comprises the plurality of network interface cards.

9. The method according to any one of claims 6 to 8, wherein the virtual instance comprises a virtual machine or a container.

10. The method according to any one of claims 6 to 9, wherein the high-speed network comprises a remote direct memory access RDMA network, a compute express link CXL network, or a non-volatile memory express NVMe network.

11. A cloud management platform, wherein the cloud management platform is configured to manage an infrastructure that provides a computing service, the infrastructure comprises a data center, the data center comprises a computing pool, a memory pool, a storage pool, and a network pool that are separately disposed, the computing pool comprises at least one server configured to provide a computing resource, the memory pool comprises at least one server configured to provide a memory resource, the storage pool comprises at least one server configured to provide a storage resource, the network pool comprises at least one server configured to provide a network resource, the computing pool, the memory pool, the storage pool, and the network pool are connected via a high-speed network, and the cloud management platform comprises:
a request obtaining module, configured to obtain a virtual instance creation request input by a tenant, wherein the virtual instance creation request carries specification configuration information of a virtual instance, and the specification configuration information indicates a computing resource, a memory resource, a storage resource, and a network resource that are required by the virtual instance; and
a virtual instance creation module, configured to create the virtual instance in a first server of the computing pool based on the virtual instance creation request, wherein the computing resource of the virtual instance is provided by the first server, the memory resource of the virtual instance is provided by a second server of the memory pool for the virtual instance in the first server via the high-speed network, the storage resource of the virtual instance is provided by a third server of the storage pool for the virtual instance in the first server via the high-speed network, and the network resource of the virtual instance is provided by a fourth server of the network pool for the virtual instance in the first server via the high-speed network.

12. The cloud management platform according to claim 11, wherein the request obtaining module is further configured to:
obtain a virtual instance specification adjustment request, wherein the virtual instance specification adjustment request indicates the cloud management platform to adjust a size of one or sizes of any combination of the computing resource, the memory resource, the storage resource, and the network resource that are provided for the virtual instance; and
the virtual instance creation module is further configured to: based on the virtual instance specification adjustment request, notify the first server to adjust a size of the computing resource provided for the virtual instance, notify the second server to adjust a size of the memory resource provided for the virtual instance via the high-speed network, notify the third server to adjust a size of the storage resource provided for the virtual instance via the high-speed network, and/or notify the fourth server to adjust a size of the network resource provided for the virtual instance via the high-speed network.

13. The cloud management platform according to claim 11 or 12, wherein a plurality of processor cores are disposed in each server in the computing pool, the computing resource comprises the plurality of processor cores, a plurality of memories are disposed in each server in the memory pool, the memory resource comprises the plurality of memories, each server in the storage pool comprises a plurality of hard disks, the storage resource comprises the plurality of hard disks, each server in the network pool comprises a plurality of network interface cards, and the network resource comprises the plurality of network interface cards.

14. The cloud management platform according to any one of claims 11 to 13, wherein the virtual instance comprises a virtual machine or a container.

15. The cloud management platform according to any one of claims 11 to 14, wherein the high-speed network comprises an RDMA network, a CXL network, or an NVMe network.

16. A cloud management platform, wherein the cloud management platform is configured to manage an infrastructure that provides a computing service, the infrastructure comprises a data center, the data center comprises a computing memory pool, a storage pool, and a network pool that are separately disposed, the computing memory pool comprises at least one server configured to provide a computing resource and a memory resource, the network pool comprises at least one server configured to provide a network resource, the computing memory pool, the storage pool, and the network pool are connected via a high-speed network, and the cloud management platform comprises:
a request obtaining module, configured to obtain a virtual instance creation request input by a tenant, wherein the virtual instance creation request carries specification configuration information of a virtual instance, and the specification configuration information indicates a computing resource, a memory resource, a storage resource, and a network resource that are required by the virtual instance; and
a virtual instance creation module, configured to create the virtual instance in a first server of the computing memory pool based on the virtual instance creation request, wherein the computing resource and the memory resource of the virtual instance are provided by the first server, the storage resource of the virtual instance is provided by a second server of the storage pool for the virtual instance in the first server via the high-speed network, and the network resource of the virtual instance is provided by a third server of the network pool for the virtual instance in the first server via the high-speed network.

17. The cloud management platform according to claim 16, wherein the request obtaining module is further configured to:
obtain a virtual instance specification adjustment request, wherein the virtual instance specification adjustment request indicates the cloud management platform to adjust a size of one or sizes of any combination of the computing resource, the memory resource, the storage resource, and the network resource that are provided for the virtual instance; and
the virtual instance creation module is further configured to: based on the virtual instance specification adjustment request, notify the first server to adjust a size of the computing resource provided for the virtual instance, notify the first server to adjust a size of the memory resource provided for the virtual instance via the high-speed network, notify the second server to adjust a size of the storage resource provided for the virtual instance via the high-speed network, and/or notify the third server to adjust a size of the network resource provided for the virtual instance via the high-speed network.

18. The cloud management platform according to claim 16 or 17, wherein a plurality of processor cores are disposed in each server in the computing memory pool, the computing resource comprises the plurality of processor cores, a plurality of memories are disposed in each server in the computing memory pool, the memory resource comprises the plurality of memories, each server in the storage pool comprises a plurality of hard disks, the storage resource comprises the plurality of hard disks, each server in the network pool comprises a plurality of network interface cards, and the network resource comprises the plurality of network interface cards.

19. The cloud management platform according to any one of claims 16 to 18, wherein the virtual instance comprises a virtual machine or a container.

20. The cloud management platform according to any one of claims 16 to 19, wherein the high-speed network comprises an RDMA network, a CXL network, or an NVMe network.

21. A computing device cluster, comprising at least one computing device, wherein each computing device comprises a processor and a memory; and
the processor of the at least one computing device is configured to execute instructions stored in the memory of the at least one computing device, to enable the computing device cluster to perform the method according to any one of claims 1 to 5 or 6 to 10.

22. A computer-readable storage medium, configured to store a computer program, wherein when the computer program is run on a computer or a processor, the computer or the processor is enabled to implement the method according to any one of claims 1 to 5 or 6 to 10.

23. A computer program product, wherein the computer program product comprises instructions, and when the instructions are run on a computer or a processor, the computer or the processor is enabled to implement the method according to any one of claims 1 to 5 or 6 to 10.
